# EUROPÄISCHE PATENTSCHRIFT

(11) **EP 0 788 599 B1**
(45) Veröffentlichungstag und Bekanntmachung des Hinweises auf die Patenterteilung: **08.07.1998**
(21) Anmeldenummer: 95934600.8
(22) Anmeldetag: 14.10.1995
(51) Int. Cl.: G01N 27/84, G01N 21/91

(54) **AUTOMATISCHE FEHLERERKENNUNGSANLAGE FÜR RISSPRÜFUNG**
AUTOMATIC FAULT DETECTION INSTALLATION FOR CRACK TESTING
INSTALLATION DE DETECTION AUTOMATIQUE DE DEFAUTS DANS LE CONTROLE DES FISSURES

(30) Priorität: 30.10.1994 DE 4438509
(43) Veröffentlichungstag der Anmeldung: 13.08.1997
(73) Patentinhaber: TIEDE GMBH + CO RISSPRÜFANLAGEN, D-73457 Essingen (DE)
(72) Erfinder: ABEND, Klaus, D-73457 Essingen (DE); FERRANO, Gert, D-73434 Aalen (DE); AICH, Albert, D-73463 Westhausen (DE)
(74) Vertreter: Neidl-Stippler & Partner
(86) Internationale Anmeldenummer: DE9501425
(87) Internationale Veröffentlichungsnummer: WO9613719

(56) Entgegenhaltungen:
- DE-A- 3 907 732
- PATENT ABSTRACTS OF JAPAN vol. 6 no. 141 (P-131) [1019] ,14.April 1982 & JP,A,57 061944 (TOKUSHIYU TORIYOU) 1.Oktober 1980,
- MEMOIRES ET ETUDES SCIENTIFIQUES DE LA REVUE DE METALLURGIE, Bd. 86, Nr. 5, 1.Mai 1989 Seiten 277-284, XP 000081273 GOEBBELS K ET AL 'AUTOMATION OF SURFACE DEFECT DETECTION AND EVALUATION'
- PATENT ABSTRACTS OF JAPAN vol. 009 no. 101 (P-353) ,2.Mai 1985 & JP,A,59 226853 (DAIDO TOKUSHUKO KK) 20.Dezember 1984,

## Beschreibung

Die Erfindung betrifft eine automatische Fehlererkennungsanlage für die Rißprüfung bei In-Prozeß-Kontrolle über Bildverarbeitung nach dem Magnetpulververfahren, wobei durch über Fluoreszenzanregungslampen zur Fluoreszenz veranlaßte Bereiche höherer Konzentration fluoreszenzfähiger magnetisierbarer Partikel auf Werkstücken ermittelt werden, mit: ein oder mehreren Bildaufnahmeeinheiten; einer Prüfmittel-Auftrage- und Sammelanlage, wobei das Prüfmittel im Kreis geführt wird; einer Bildverarbeitungseinheit, die zur Auswertung von mit den Bildaufnahmeeinheiten aufgenommenen Bildeinheiten durch Abtasten und Erkennen von helleren Bereichen und zur Ausgabe verschiedener Signale aufgrund der Auswertungslogik geeignet ist, sowie mindestens einer UV-Lampe mit Intensitätssensor sowie ein Verfahren zur automatischen Rißerkennung, wobei mit Hilfe von Lampen durch Bildaufnahmeeinrichtungen von mit Prüfmittel für die Rißfehlerprüfung behandelten Prüflingen hergestellte Bildsignale nach einem abgespeicherten Programm verarbeitet werden.

Automatisierte optische Fehlererkennung bei der Magnetpulverprüfung in Produktionsanlagen, die ständig zu überprüfende Werkstücke herstellen, wie bspw. Stranggußanlagen, Drahtendenprüfungen oder dergleichen ist bekannt. Z.Zt werden Bilder von Werkstücken mit Fluoreszenzfarbstoffen bereits optisch durch sogenannte optische Bilderkennung ausgewertet, wobei die durch das an sich bekannte Magnetpulverfahren sichtbar gemachten Fehler durch ein optisches Abtast- und Bilderkennungsverfahren erkannt und mit einer abgespeicherten Fehlerlogik verglichen werden.

Applikationsversuche über die Anwendbarkeit des Verfahrens reichen von der Drahtendenprüfung bis zu Schwenklagern. Bei den bekannten Anlagen besteht das Problem, daß die Sicherheit und Überprüfbarkeit der Anlagen nicht gegeben ist. Es fehlen Bezüge auf Prüfverfahren und seine Grenzen, Testfehler und seine Handhabung, Leistungsabgrenzung, Toleranzangaben usw., die heute erwünscht sind.

Die bekannten automatischen Rißprüfungsverfahren haben einige Nachteile.

Bei Prüflingen mit Kanten, Bohrungen etc. lagert sich Prüfmittel an Kanten ab. Das bedeutet, daß das Prüfen mit der Kamera, im Vergleich zur Anzeigenauswertung mit dem Auge, nur über Fensterbildung möglich ist. Es entfällt somit die durch den Menschen mögliche "ganzheitliche Betrachtung" des Prüflings und in der Regel wird über Fenster nur der sicherheitsrelevante Teil bewertet. Zur Minimierung der durch die gesetzten Prüffenster nicht geprüften Oberflächen ist eine sehr exakte Prüflingspositionierung vor der Kamera notwendig. Fertigungstoleranzen und Positionierungstoleran-zen führen dazu, daß häufig bei Prüfmustern nur etwa 80 - 85 % der sicherheitsrelevanten Prüffläche geprüft werden kann.

Die bisher nicht dokumentierbare Magnetpulverprüfung wurde wegen der Fehlererkennbarkeit bisher lediglich zur Prozeßüberwachung eingesetzt. Die Serienteilehersteller beherrschen ihre Herstellprozesse so gut, daß auch eine nicht sehr hohe Fehlererkennbarkeitswahrscheinlichkeit ausreicht, um Prozesse nachzujustieren.

Durch die Auswertung der Rissfehleranzeige mit Kameras werden Probleme der Rissgeometriezuordnung zur Anzeigenintensität und zur Raupengröße nicht gelöst. Die Kamera unterscheidet nur Helligkeitsunterschiede und deswegen sind alle Parameter, die die Helligkeit beeinflussen, in die Rissfehlerreproduzierbarkeit einzubeziehen.

Wegen der unzureichenden Beschreibung natürlicher Fehler und der damit verbundenen kritisch auffindbaren Fehlergröße hat es sich auch von Vorteil erwiesen, für die Beurteilung der Empfindlichkeit von Magnetpulveranlagen sogenannte Testfehler einzuführen. Die Testfehler können künstlich eingebrachte Oberflächenfehler am Prüfgut sein. Diese Fehler haben den Nachteil, daß sie nach mehrmaliger Magnetisierung praktisch nicht mehr abwaschbar sind und damit für einen Integraltest nicht mehr zur Verfügung stehen. Abhilfe schaffen hier abwaschbare, künstlich eingebrachte Fehler, diese sind aber aufwendiger. Für den Nachweis der Reproduzierbarkeit der Bildverarbeitung reichen aber auch einfache Farbfadenkreuze, oder etwas Ähnliches aus.

Durch die Verwendung von Testfehlern bzw. Testwerkstücken mit Testfehlern ist es lediglich möglich, die Funktion einer Anlage in bestimmten Abständen zu überprüfen - damit ist keine direkte Fehleranalyse der für eine Fehlmessung verantwortlichen Anlagenteile möglich und es kann auch sein, daß die Anlage bereits einige Zeit (d.h. vor dem Durchlauf des Testkörpers) fehlerhaft arbeitet, bis dieses Fehlverhalten durch den Testkörper aufgedeckt wurde. Es ist auch nicht vollständig sicher, ob der abweichende Meßwert nun möglicherweise auf einer falschen Positionierung des Testkörpers oder seiner Rißnachbildung beruht. Das Testkörperverfahren als regelmäßige Untersuchungsmethode für die Funktionsfähigkeit einer Anlage ist daher verbesserungsfähig.

Beim Einsatz der bisherigen Anlagen traten - wie man durch Messung von Testkörpern feststellen konnte, mit längerer Standzeit der Anlage andere Meßergebnisse eines gleichen Prüfkörpers auf.

Aus der DE-A-3907732 ist eine Vorrichtung zum automatischen Rißprüfen bekannt geworden, die allerdings nicht selbstüberprüfend ist. In diesem Dokument werden lediglich die Kamerafunktion, die UV-Lampenintensität und das Rißprüfmittel überwacht - diese Überwachungskriterien führen aber immer nur zum Abstellen der Anlage und nicht zu einer automatischen Behebung von Fehlern, also einer Selbstregelung.

Die JP-A-57-61944 betrifft eine Vorrichtung zur Magnetpulversuspensionsüberprüfung mit automatischem Nachregeln der Magnetpulversuspensionskonzentration - diese Vorrichtung ist aber in keiner Form mit einer Dokumentationseinrichtung oder einer sich selbst überprüfenden Rißprüfanlage kombiniert, sondern es handelt sich um einen Einzelbaustein.

Dies bedeutet, daß eine sichere Prüfung in einer Rißprüfanlage bisher aufgrund der sich ständig verändernden Anlagenparameter, wie Suspensionskonzentration, Lampenintensität, Kamarajustierung etc. fraglich war.

Es ist daher Aufgabe der Erfindung, automatisch über Bilderkennungsverfahren und Kameras arbeitende Anlagen so zu verbessern, daß Ihre Leistung sowohl verbessert als auch vergleichmäßigt wird und Fehler sicherer erkannt werden.

Die Aufgabe wird durch eine automatische Fehlererkennungsanlage gelöst, bei der mindestens eine, ggf. bewegbare Bildaufnahmeeinheit vorgesehen ist, deren geometrische Anordnung, Focus und auch Finktion durch Sensoren überprüfbar ist; die Spannung der mindestens einen UV-Lampe entsprechend Signalen eines Rechners nachregelbar ist; eine Prüfmittel-Überprüfungs-Vrorichtugn in einer Bypaßleitung zur Prüfflüssigkeitsausbringung vorgesehen ist, die ein der Messung des Prüfmittels entsprechendes Signal erzeugt; wobei die die Signale der Prüfeinheiten in einen Rechner geführt werden, der diese mit vorgegebenen Daten vergleicht und dementsprechend Signale ausgibt, dazu einer Anzeige, wie Monitor(en), einem Festwertspeicher, einem Drucker und einer Einrichtung zur Änderung von Betriebsgrößen, wie der Lampenspannung, derAnordnung und Empfindlichkeit der Bildaufnahmeein-heitenausrichtung oder auch zum Abstellen der Anlage führen können. geleitet werden.

Vorteilhafterweise können die Bildaufnahmeeinheiten Kameras, bevorzugt Videokameras, sein. Es können aber auch andere Erkennungseinrichtungen, wie bspw. Diodenfelder, Photomultiplieranordnungen etc. eingesetzt werden.

Bevorzugt erfolgt die optische Bildverarbeitung im System durch Setzen von Fenstern, Abtasten des Fensters durch die Bildauswerteeinheit sowie die Verarbeitung der daraus erhaltenen Daten in einem Rechner.

Bevorzugt ist die UV-Lampenintensität entsprechend den Meßsignalen über die Ausgangssignale des Rechners nachregelbar.

Es ist auch möglich, UV-Blitzlichtlampen zur Bildherstellung einzusetzen - dadurch unter anderem hohe Intensitäten erzielt werden und relativ gleichbleibende Belichtungszeiten.

Bei größeren Prüflingen oder solchen, die allseitig untersucht werden müssen, kann es notwendig sein, den Prüfling vor den Bildaufzeichungseinheiten zu drehen - diese Drehung kann durch bekannte Maßnahmen überwacht werden.

Bevorzugt gibt der Rechner seine Signale auf einem Speichermedium, wie einem Drucker für Prüfdokumente, Disketten oder dgl. aus, wobei dieser aber auch Steuersignale für die Anlage herstellen und darüber den Anlagenbetrieb steuern oder auch abschalten kann.

Bevorzugt weist die Anlage eine Magnetfeldmeßsonde auf, die die Feldstärke H am vom Strom durchflossenen Prüfling mißt und das Meßsignal zum Rechner führt.

Es ist sinnvoll, die Stromstärke des durch den Prüfling fließenden Stroms zum Aufbau des Meßmagnetfeldes zu messen und ebenfalls im Rechner zu verarbeiten, wobei diese als ein Maß dafür genommen wird, daß das Magnetfeld ordnungsgemäß durch den Prüfling aufgebaut wurde und der Prüfling richtig in der Magnetisierungsanlage positioniert wurde.

Die Erfindung bezieht sich auch auf ein Verfahren zur automatischen Rißerkennung, wobei mit Hilfe von Lampen durch Bildaufnahmeeinrichtungen von mit Prüfmittel für die Rißfehlerprüfung behandelten Prüflingen hergestellte Bildsignale nach einem abgespeicherten Programm verarbeitet werden; wobei Meßwerte über die Lampenfunktion; Meßwerte über das Prüfmittel in einer Prüfmittelüberprüfungseinheit; Meßwerte über die geometrische Anordnung der Bildaufnahmeeinrichtungen zu den aufzunehmenden Gegenständen; und Meßwerte über die Funktion der Bildaufnahmeeinrichtung ermittelt und zu einem Rechner übermittelt werden, der aufgrund eines abgespeicherten Programms ein oder mehrere Signale ausgibt, die entsprechend zur Nachregelung der Lampenspannung, des Prüfmittelgehalts, der Bildaufnahmeeinrichtung eingesetzt werden und zumindest teilweise auf einem permanenten Medium, wie einem Prüfdokument, gemeinsam mit Anlagendaten wie Tagesdatum, -zeit, Anlagenlaufdauer etc. aufgezeichnet werden.

Dabei ist es möglich, daß über die Signale des Rechners die Anlage angehalten/abgestellt wird.

Es ist sinnvoll, daß Signale der Rechner auf einem permanenten Medium, wie einem Prüfdokument, gemeinsam mit Anlagedaten wie Tagesdatum, -zeit, Anlagenlaufdauer etc. aufgezeichnet werden - ggf. kann auch der Prüfling selbst entsprechend markiert werden (Prüfstempel, Prüfsiegel).

Es kann auch sinnvoll sein, daß die Signale zum automatischen Austausch oder Nachliefern von Prüfmittel führen.

Vorteilhafte Weiterbildungen ergeben sich aus den Unter-ansprüchen.

Dadurch, daß nun wesentliche Einzelbestandteile der Prüfanlage ständig überprüft werden und diese Überprüfung protokolliert werden kann, ist nun eine permanente Überwachung und Dokumentation der Überwachung der Überprüfung möglich. Es ist auch jederzeit möglich, die Anlage bei schlechter oder unzulänglicher Funktion abzustellen, sodaß eine automatische RißÜberprüfung von Teilen als sicher jedenfalls hinsichtlich der Funktion der Prüfanlage gelten kann.

Nachfolgend wird die Erfindung näher anhand von Beispielen sowie der schematischen Zeichnung einer automatischen Rißüberprüfungsanlage näher erläutert.

Wie aus der einzigen schematischen Darstellung ersichtlich, werden Werkstücke bei dem automatischen Rißprüfverfahren zunächst in einer Beschichtungsanlage (Tauch- oder Sprühanlage, ggf. mit Ultraschallbehandlung) mit Rißprüfmittel behandelt. Rißprüfmittel ist üblicherweise eine Suspension eines magnetisierbaren, bevorzugt ferromagnetischen fluoreszenzfähigen partikelförmigen Materials, in die das Werkstück getaucht wird oder die auf das Werkstück aufgesprüht wird.

Nach Aufbringen des Rißprüfmittels wird das Werkstück mit Strom beaufschlagt, wodurch sich ein Magnetfeld ausbildet, in dem sich die ferromagnetischen Partikel ausrichten. Aufgrund bekannter physikalischer Phänomene werden dabei an Spitzen und Kanten erhöhte Partikelkonzentrationen aufgefunden, die dazu führen, daß die Partikel sich nicht nur an den Kanten des Werkstücks, sondern auch an Rißkanten oder Spitzen/Graten von Fehlern im Werkstück, die auch als Kanten wirken ansammeln. Die so beschichteten Teile werden sodann durch eine Beleuchtungsquelle bestrahlt, wobei die Bereiche erhöhter Partikelkonzentration heller durch Fluoreszenz erstrahlen, als die normalen Metallflächen.

Die Fluoreszenzbilder werden durch eine Optische Erkennung aufgenommen - entweder nach einem vorherbestimmten Muster abgetastet oder als Ganzes aufgenommen und das Bild anschließend ausgewertet.

Das Ergebnis dieser Bildaufzeichnung wird sodann in einen Rechner geleitet, der diese Aufzeichnung mit abgespeicherten Werten vergleicht und aufgrund eines Programms Meldungen über das Werkstück herausgibt, die zur Bewertung des Werkstücks führen können. Der Rechner erhält nun erfindungsgemäß auch Daten von der Überprüfungsanlage selbst, nämlich von einer Prüfmittelüberwachungsanlage über die Funktionsfähigkeit des Prüfmittels, von einer Beleuchtungsüberprüfung über die Funktion der Beleuchtung, bspw. der Intensität der UV-Lampe; von der Magnetisierungsstation über den Stromdurchgang und über das vom Werkstück aufgebaute Magnetfeld; von der Opt. Erkennung über dessen Funktion (ggf. Focus, Entfernung zum Meßobjekt, Funktionsfähigkeit der Kamera). Diese Signale können einzeln oder gemeinsam zu einem Protokoll verarbeitet werden, das ggf. als Prüfprotokoll auf einem Drucker oder einem anderen Medium, als Papier, ausgegeben werden kann.

Durch dieses Prüfprotokoll ist jederzeit die Funktion der Anlage zu bestimmten Zeiten belegbar.

Die vom Rechner erstellten Signale können zu einer Werkstückzuführung gesendet werden, um die Werkstückzuführung anzuhalten oder die Anlage abzustellen. Es ist auch möglich, diese Signale speziell zum Nachregeln von Anlagenparametern zu verwenden, wie bspw. der Lampenspannung zur Erhöhung der Lampenintensität; Einstellen des Focus der Bildaufnahmeeinrichtung oder der geometrischen Anordnung derselben; Nachliefern von neuem Rißprüfmittel, falls das alte verbraucht ist, Nachregeln des durch das Werkstück verlaufenden Stroms; etc.

Dadurch, daß nun erstmals eine Erfassung der Rißüberprüfungsanlage selbst erfolgt, arbeitet diese zuverlässiger und präziser als bisher und die Reproduzierbarkeit der Meßwerte ist gewährleistet.

Eine ständige Kontrolle der Anlage kann auch (ggf. gleichzeitig) über auf Monitoren ausgegebene Überwachungsdaten, die von einer Bedienungsperson überwacht werden, die sodann Maßnahmen ergreifen kann, erfolgen

Dabei können die nachfolgenden Überwachungsparameter ermittelt und an den Rechner übermittelt werden.

### Kamerafunktion

Bevorzugt wird die Erfindung mit Videokameras verwirklicht, wobei aber auch andere optische Erkennungssysteme möglich sind. Bei Systemen mit mehreren Video-Kameras ist es unabdingbar, in regelmäßigen Zeitabständen Objektiveinstellung Blende, Focus und Abstand, die durch dem Fachmann bekannte Mittel erhältlich sind, abzufragen (bspw. digital) und jede Ände-rung in der Objektiveinstellung automatisch zu detektieren, dokumentieren und/oder Alarm auszulösen. Es hat sich gezeigt, daß autorisierte und nicht auto-risierte Personen die Kameraeinstellungen ändern und dadurch die Anlage in nicht kontrollierbarem Zustand fährt.

Es kann sinnvoll sein, bei Prüfteilgeometriewechsel gespeicherte Objektiveinstellwerte pro Teilegeometrie im System abgespeichert zu haben und die Kameras bei Prüfteilwechsel automatisch durch den Rechner zu setzen, sodaß aufwendige Justierarbeiten vermieden werden können.

### Lampenfunktion:

Da zur Herstellung von Fluoreszenz die Anregungsstrahlung äußerst wichtig ist, denn sie bestimmt grundsätzlich die Intensität der Fluoreszenz, die wiederum die gesamte Empfindlichkeit der Anlage regiert - muß deren Funktion ständig überwacht werden. Bekanntlich ändert sich durch die Alterung von Lampen deren Spektrum insbesondere im hochenergetischen Teil. Diese abnehmende Beleuchtungsintensität führt automatisch zu schlechterer Fehlererkennung, da weniger Fluoreszenzanregung auftritt. Erfindungsgemäß wird vorgeschlagen, die Lampenintensität über einen Sensor, der bevorzugt nur im Fluoreszenzanregungsbereich des Spektrums mißt, zu überwachen. Änderungen der Lampenintensität lassen sich dann meist einfach durch Erhöhung der Lampenspannung ausgleichen. Andernfalls muß die Lampe ausgewechselt werden oder die Empfindlichkeit der Bildaufnahmeeinheit entsprechend nachgeregelt werden.

### Prüfflüssigkeitsüberwachung

Die automatische Anzeigenauswertung mit dem Opto-Tec-System reagiert nur auf Helligkeitsunterschiede. Bei Prüfmittelverbrauch während der Prüfung kann entweder die Fehleranzeigehelligkeit zusammen mit der Untergrundanzeigehelligkeit proportional sinken, oder auch nur die Fehleranzeigenhelligkeit. Beides führt aber dazu, daß die Reproduzierbarkeit der Anlage mit dem Prüfmittelverbrauch verloren geht.

Die Anlage enthält eine automatisch arbeitende ASTM-Birne, die Gegenstand einer Parallelanmeldung mit gleichem Datum ist. Die Prüfmittelüberwachungseinheit ist ausgelegt, das Prüfmittel zu überwachen und kann mit engen Toleranzen zur Uberwachung der Prüfflüssigkeit und zur Verbesserung der Reproduzierbarkeit eingesetzt werden. Insbesondere bei gegossenen Prüfteilen, wie z.B. bei der Automobilindustrie, ist der Prüfmittelaustrag relativ groß, es wird Prüfmittel nachgeschüttet und die Reproduzierbarkeit der Messungen ist ohne Überwachung empfindlich gestört.

Die automatisch arbeitende Prüfmittelüberwachungsanlage gibt hier Abhilfe, indem sie eine ständige Kontrolle des Prüfmittels u. ggf. sogar dessen automatisierte Ergänzung ermöglicht.

Die Signale des Rechners können auch über Datenfernübertragung so übertragen werden, daß aus den übermittelten Daten Ferndiagnosen möglich sind. Darüber hinaus sind wesentliche Anlagenfunktionen, Magnetisierungskreis, Stoppertakte usw., auf einen Monitor bringbar.

Die geforderte Leistungsfähigkeit des Rechners kann bspw. durch einen schnellen Industrie-PC und schnelle Grafik-Karte erbracht werden .

Die hohen Taktzeiten einerseits und die verschiedenen sicherheitsrelevanten Oberflächen andererseits, können zu aufwendigen Parallelschaltungen von Kameras als Bildaufnahmeeinrichtungen führen. So sind z.B. bei Automobilherstellern für links- und rechtssymmetrische Teile je 9 Kameras notwendig, die zwar seriell von Station zu Station angefahren werden, aber immer nur 1 Segment prüfen. Dadurch wird durch Quasiparalleles Prüfen die hohe Taktzahl erreicht. Ein Nachteil dieser Systeme liegt auch darin, daß zur entsprechenden Ausleuchtung der zu untersuchenden Fläche jeweils eine UV-Lampe eingesetzt werden muß. Das bedeutet, daß alle Unsicherheiten bezüglich UV-Leuchten 18-mal auftreten können.

Verschiedene Alternativen sind möglich:
- Positionieren eines Teiles und Auswerten von Rissanzeigen mit mehreren Kameras, die auf auf das Teil gerichtet sind. Nachteilig ist hier die hohe Kamerazahl und ein zeitlich versetztes Abfragen der einzelnen Kameras. Dadurch wird die Taktzeit verlängert, gegenseitige Störungen sind möglich.
- Stehendes Prüfgut und bewegte Kamera. Der Mechaniktransport der Kamera ist wesentlich aufwendiger als die parallel geschalteten Kameras.

Bei einem Kamerasystem wird das Werkstück mit einem Roboter jeweils aufnahmerichtig vor die Kamera gehalten. Falls bspw. sehr komplizierte Schmiedeteile nach der Magnetisierung zu einer Beobachtungsstation transportiert werden, werden die Teile einmal gespannt an zwei Auflagepunkten und rotierend vor dem Beobachter bewegt. Der Beobachter kann den Rotationsvorgang zur intensiveren Betrachtung von Anzeigen anhalten.

Nach Festlegung der sicherheitsrelevanten Oberflächenbereiche wird das Teil gesteuert, bevorzugt automatisch, rotiert. Parallel zum Drehgeber ist eine Winkelaufnahme, die sowohl die Drehbewegung steuert, als auch entsprechend positionierte und eingestellte Kameras aktiviert. Die UV-Bestrahlung kann über UV-Blitzlicht praktisch für alle Kameras einmal erfolgen. Durch ein solches System kann die Zahl der Kameras drastisch gesenkt werden und es ergibt sich eine Optimierung zwischen Zahl der Kameras und evtl. notwendiger mechanischer Bewegung der Kameras.

Obwohl die Erfindung anhand bevorzugter Ausführungsbeispiele erläutert wurde, sind dem Fachmann Abwandlungen derselben geläufig, die ebenfalls unter den Schutzumfang der Ansprüche fallen, sodaß die Erfindung keineswegs auf die Ausführungsbeispiele begrenzt ist.

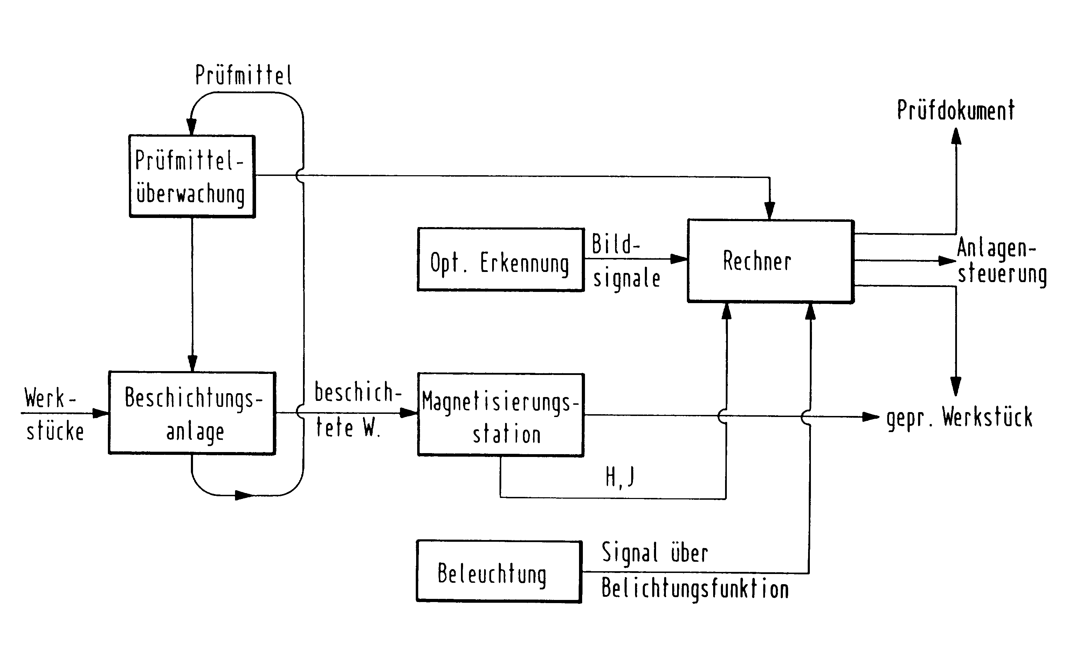

## Patentansprüche

1. Automatische Fehlererkennungsanlage für die Rißprüfung bei In-Prozeß-Kontrolle über Bildverarbeitung nach dem Magnetpulververfahren, wobei über Fluoreszenzanregungsbeleuchtungseinrichtungen zur Fluoreszenz veranlaßte Bereiche höherer Konzentration fluoreszenzfähiger magnetisierbarer Partikel auf Werkstücken ermittelt werden, mit
- einer oder mehreren Bildaufnahmeeinheiten;
- einer Prüfmittel-Auftrage- und Sammelanlage, wobei das Prüfmittel im Kreis geführt wird;
- einer Bildverarbeitungseinheit, die zur Auswertung von mit den Bildaufnahmeeinheiten aufgenommenen Bildeinheiten durch Abtasten und Erkennen von helleren Bereichen und zur Ausgabe verschiedener Signale aufgrund der Auswertungslogik geeignet ist, sowie
- mindestens eine UV-Lampe mit Intensitätsmeßsensor
dadurch gekennzeichnet, daß
- mehrere, ggf. bewegbare Bildaufnahmeeinheiten, wie Kameras, Videokameras, vorgesehen sind, deren geometrische Anordnung, Focus und auch Funktion durch Sensoren überprüfbar ist,
- die Spannung der UV-Lampe entsprechend Signalen des Rechners nachregelbar ist,
- die Prüfmittelüberprüfungs-Vorrichtung in einer Bypaßlei tung zur Prüfflüssigkeitsausbringung vorgesehen ist, die ein der Messung des Prüfmittels entsprechendes Signal erzeugt;
- wobei die Signale der Prüfeinheiten in einen Rechner ge führt werden, der diese mit vorgegebenen Daten vergleicht und dementsprechend Signale ausgibt, die zu einer Anzeige,
wie Monitor(en), einem Festwertspeicher, wie einem Drucker und einer Einrichtung zur Änderung von Betriebsgrößen, wie der Lampenspannung, der Anordnung und Empfindlichkeit der Bildaufnahmeeinheitenausrichtung oder auch zum Abstellen der Anlage führen können, geleitet werden.

2. Anlage nach Anspruch 1, dadurch gekennzeichnet, daß die optische Bildverarbeitung durch Setzen von Fenstern und Abtasten des Fensters durch die Bildaufzeichnungseinheit sowie der Verarbeitung der daraus erhaltenen Daten in einem Rechner erfolgt.

3. Anlage nach einem der vorangehenden Ansprüche, dadurch gekennzeichnet, daß die Bilder mit UV-Blitzlichtlampen aufgenommen werden.

4. Anlage nach einem der vorangehenden Ansprüche, dadurch gekennzeichnet, daß der Prüfling vor den Bildaufzeichungseinheiten drehbar ist.

5. Anlage nach irgendeinem der vorangehenden Ansprüche, dadurch gekennzeichnnet, daß eine Magnetfeldmeßsonde vorgesehen ist, die die Feldstärke H am vom Strom durchflossenen Prüfling mißt und das Meßsignal zum Rechner führt und daß eine Meßeinrichtung für die Stromstärke des durch den Prüfling fließenden Stroms zum Aufbau des Meßmagnetfeldes vorgesehen ist, die diese mißt und das Meßsignal zum Rechner führt, wo es verarbeitet wird.

6. Verfahren zur automatischen Rißerkennung, wobei mit Hilfe von Lampen durch Bildaufnahmeeinrichtungen von mit Prüfmittel für die Rißfehlerprüfung behandelten Prüflingen hergestellte Bildsignale nach einem abgespeicherten Programm verarbeitet werden; dadurch gekennzeichnet, daß
Meßwerte über die Lampenfunktion;
Meßwerte über das Prüfmittel in einer Prüfmittelüberprüfungseinheit;
Meßwerte über die geometrische Anordnung der Bildaufnahmeeinrichtungen zu den aufzunehmenden Gegenständen; und
Meßwerte über die Funktion der Bildaufnahmeeinrichtung ermittelt und zu einem Rechner übermittelt werden, die aufgrund eines abgespeicherten Programms ein oder mehrere Signale ausgibt, die entsprechend zur Nachregelung der Lampenspannung, des Prüfmittelgehalts, der Bildaufnahmeeinrichtung eingesetzt werden und zumindest teilweise auf einem permanenten Medium, wie einem Prüfdokument, gemeinsam mit Anlagendaten wie Tagesdatum, - zeit, Anlagenlaufdauer etc. aufgezeichnet werden.

## Claims

1. Automatic fault detection system for testing cracks with in-process checking via image processing according to the magnetic particle method, wherein regions of a relatively high concentration of fluorescent magnetisable particles, which are caused to fluoresce via fluorescence promoting illumination devices, are determined on workpieces, said system having
- one or more image receiving units;
- a test medium applying and collecting system, the test medium being guided in a circle;
- an image processing unit, which is suitable for the evaluation of image units, received with the image receiving units, by scanning and detecting brighter regions and for the emission of different signals by virtue of evaluation logic; and
- at least one UV lamp with an intensity measuring sensor,
characterised in that
- a plurality of image receiving units, possibly displaceable image receiving units, such as cameras and video cameras, are provided, the geometrical disposition, focus and also operation of which are examinable by sensors;
- the voltage of the UV lamp is adjustable according to signals of the computer;
- the test medium examining apparatus is provided in a bypass line for the distribution of the test fluid, which produces a signal corresponding to the measurement of the test medium; and
- the signals of the testing units being conducted to a computer, which compares them with prescribed data and accordingly emits signals which are conveyed to a display unit, such as a monitor (monitors), to a constant memory, such as a printer, and to an arrangement for changing operational parameters, such as the lamp voltage and the disposition and sensitivity of the image receiving unit alignment, or such parameters may even lead to the shutdown of the system.

2. System according to claim 1, characterised in that the optical image processing is effected by erecting windows and scanning the window through the image recording unit, and the processing of the data obtained therefrom is effected in a computer.

3. System according to one of the preceding claims, characterised in that the images are received with UV flashlight lamps.

4. System according to one of the preceding claims, characterised in that the test piece is rotatable in front of the image recording units.

5. System according to any of the preceding claims, characterised in that a magnetic field measuring probe is provided, which measures the field intensity H at the test piece, through which the current flows, and conducts the measurement signal to the computer, and in that a measuring arrangement for measuring the current intensity of the current flowing through the test piece is provided for the build-up of the measuring magnetic field, said arrangement measuring the current intensity and conducting the measurement signal to the computer where it is processed.

6. Method of automatically detecting cracks, wherein image signals, produced by means of lamps through image receiving devices for test
pieces treated with test medium for testing crack faults, are processed according to a stored program, characterised in that
measurement values concerning the lamp operation,
measurement values concerning the test medium in a test medium examining unit,
measurement values concerning the geometrical disposition of the image receiving devices relative to the objects to be received, and
measurement values concerning the operation of the image receiving device
are determined and transmitted to a computer, said image receiving device emitting, by virtue of a stored program, one or more signals which are used accordingly for the adjustment of the lamp voltage, the test medium content and the image receiving device and are recorded, at least partially, on a permanent medium, such as a test document, together with system data such as the date, time of day, system running time, etc.

## Revendications

1. Installation de détection automatique de défauts pour le contrôle de fissures, lors du contrôle en cours de procédé, par traitement d'image selon le procédé à poudre magnétique, des zones de concentration plus élevée de particules magnétisables et susceptibles de fluorescence donnant lieu à une fluorescence par l'intermédiaire de dispositifs d'éclairage d'excitation de fluorescence étant détectées sur des pièces, comportant :
- une ou plusieurs unités de réception d'image ;
- une installation d'application et de collecte d'un agent de contrôle, l'agent de contrôle étant guidé dans le circuit ;
- une unité de traitement d'image, qui est appropriée pour exploiter des unités d'image reçues par les unités de réception d'image par balayage et reconnaissance des zones plus claires et pour fournir différents signaux à partir de la logique d'exploitation, ainsi que
- au moins une lampe ultraviolette ayant un capteur de mesure d'intensité,
caractérisée en ce que :
- plusieurs unités de réception d'image, comme des caméras, des caméras vidéo, le cas échéant mobiles, sont prévues, dont l'agencement géométrique, le foyer et également le fonctionnement peuvent être vérifiés par des capteurs,
- la tension de la lampe ultraviolette peut être réglée de façon correspondant à des signaux du calculateur,
- le dispositif de vérification de l'agent de contrôle est prévu dans un conduit de dérivation pour évacuer le liquide de contrôle, qui engendre un signal correspondant à la mesure de l'agent de contrôle ;
- les signaux des unités de contrôle étant amenés dans un calculateur qui compare ceux-ci à des données prédéfinies et fournit des signaux correspondants qui sont amenés à un affichage, comme un ou des moniteurs, à une mémoire de constantes, comme une imprimante, et à un dispositif pour modifier des grandeurs de fonctionnement, comme la tension de lampe, l'agencement et la sensibilité de l'orientation des unités de réception d'image, ou également qui peuvent entraîner l'arrêt de l'installation.

2. Installation selon la revendication 1,
caractérisée en ce que le traitement d'image optique est effectué par l'établissement de fenêtres et le balayage de la fenêtre par l'unité d'enregistrement d'image ainsi que par le traitement des données ainsi obtenues dans un calculateur.

3. Installation selon une des revendications précédentes,
caractérisée en ce que les images sont reçues par des lampes à flashs ultraviolettes.

4. Installation selon une des revendications précédentes,
caractérisée en ce que l'éprouvette peut tourner devant les unités d'enregistrement d'image.

5. Installation selon une quelconque des revendications précédentes,
caractérisée en ce qu'une sonde de mesure de champ magnétique est prévue, qui mesure l'intensité du champ H sur l'éprouvette traversée par le courant et conduit le signal de mesure au calculateur, et en ce qu'un dispositif de mesure de l'intensité du courant circulant à travers l'éprouvette pour former le champ magnétique de mesure est prévu, qui mesure celle-ci et conduit le signal de mesure au calculateur, où il est traité.

6. Procédé pour la détection automatique de fissures, des signaux d'image obtenus à l'aide de lampes par des dispositifs de réception d'image d'éprouvettes traitées par un agent pour contrôler des défauts de fissures étant traités selon un programme mémorisé,
caractérisé en ce que :
- des valeurs de mesure sur le fonctionnement des lampes ;
- des valeurs de mesure sur l'agent de contrôle dans une unité de vérification de l'agent de contrôle ;
- des valeurs de mesure sur l'agencement géométrique des dispositifs de réception d'image par rapport aux objets à recevoir ; et
- des valeurs de mesure sur le fonctionnement du dispositif de réception d'image
sont déterminées et amenées à un calculateur, qui fournit, à partir d'un programme mémorisé, un ou plusieurs signaux qui sont fournis de façon correspondant au réglage de la tension des lampes, de la teneur de l'agent de contrôle, du dispositif de réception d'image et sont enregistrés au moins partiellement sur un support permanent, comme un document de contrôle, en même temps que des données d'installation, comme la date du jour, le moment, la durée de fonctionnement de l'installation etc...
